# EUROPEAN PATENT APPLICATION

(11) **EP 3 614 111 A1**
(43) Date of publication of application: **26.02.2020**
(21) Application number: 19203315.7
(22) Date of filing: 26.08.2015
(51) Int. Cl.: G01J 3/02, G01J 3/18, G01J 3/28, G01J 3/44, G01J 3/36

(54) **SPECTROSCOPY APPARATUS**

(30) Priority: 28.08.2014 GB 201415238
(62) Divisional of application: 15756235.6
(71) Applicant: Renishaw PLC, Wotton-under-Edge, Gloucestershire GL12 8JR (GB)
(72) Inventor: SMITH, Brian, John, Edward, Wotton-under-Edge, Gloucestershire GL12 8JR (GB); BELL, Ian, Mac, Wotton-under-Edge, Gloucestershire GL12 8JR (GB); HAYWARD, Ian, Paul, Wotton-under-Edge, Gloucestershire GL12 8JR (GB)
(74) Representative: Matthews, Paul

(57) **Abstract**

This invention concerns a spectroscopy apparatus comprising a support (18) for a sample (102), a light source arranged to generate a light profile (110) on the sample (102). The support (102) and light source are arranged such that the light profile (110) is movable relative to the sample (102). The spectroscopy apparatus further comprises an optical input (16) for receiving light generated by interaction of the sample (102) with light from the light source, a detector (24) comprising a two-dimensional array of photodetector elements (104), a dispersive device (44) arranged between the optical input and the detector (24) to spectrally disperse light received by the optical input (16) in a spectral direction across the detector (24), an optical splitter (38) located in an optical path between the optical input (16) and the detector (24) to split light based upon wavenumber such that, for a spectrum generated by a given point on the sample (102), each of a first portion (50A) and a second portion (50B) of the spectrum is dispersed across photodetector elements (104) of a different row or column of the array. The apparatus further comprises a controller (25) arranged to control shifting of data between the photodetector elements (104) in a spatial direction, perpendicular to the spectral direction, synchronously with relative movement between the light profile (110) and the sample (102) so that data is accumulated on each of the first and second portions (50A, 50B) of the spectrum across different sets of photodetector elements (104) of the detector (24) during the relative movement.

## Description

### Field of Invention

This invention relates to spectroscopy apparatus and methods. It is particularly useful in Raman spectroscopy, though it can be used in other forms of spectroscopy.

### Background

The Raman Effect is a phenomenon in which a sample scatters incident light of a given frequency into a frequency spectrum, which has characteristic peaks caused by interaction of the incident light with the molecules making up the sample. Different molecular species have different characteristic Raman peaks, and so the effect can be used to analyse the molecular species present.

A prior Raman analysis apparatus is described in European Patent Application No. EP 0543578. A sample is illuminated by a laser beam, and the resulting Raman scattered light is analysed, and then detected. The detector may be a charge-coupled device (CCD) comprising a two-dimensional array of pixels. The analysis of the Raman spectrum may be carried out by a dispersive device such as a diffraction grating, which disperses the spectrum produced from a point or line on the sample across the width of the CCD. The apparatus may be arranged to disperse the spectrum widely across the CCD, to provide high spectral resolution.

For a CCD of a given width, however, only a part of the spectrum can then be detected at any one time. To acquire data from a wider spectrum, one possible method is to expose one part of the spectrum onto the CCD for a sufficient time, and then to read all of the data relating to that part of the spectrum from the CCD into a computer. Next, the diffraction grating is indexed to a new position, so that a second part of the spectrum is received by the CCD. Again, sufficient exposure time is allowed, and all the data from the second part of the spectrum is read into the computer. This process is repeated as often as necessary. Exposing the separate parts of the spectrum sequentially increases the time required to analyse the complete spectrum compared with a lower resolution system in which the whole spectrum of interest is dispersed more narrowly across the width of the CCD.

A further method, as disclosed in US5638173, is to split the spectrum into separate optical paths using edge filters and a mirror. These components are tilted at different angles so that, after the beams have been dispersed by a diffraction grating, partial spectra are formed on the detector, one above the other. This allows several consecutive parts of the spectrum to be widely dispersed and viewed simultaneously.

If it is desired to map an area of the sample, rather than just a single point or line, then it is known to mount the sample on a stage which can be moved in orthogonal directions X, Y. Alternatively, movable mirrors may deflect the light beam across the surface of the sample in X and Y directions. Thus, a raster scan of the sample can take place, giving Raman spectra at each point in the scan

To reduce the time taken for a scan, it is known to illuminate the sample not with a point focus, but with a line focus. This enables the acquisition of spectra from multiple points within the line simultaneously. On the CCD detector, it is arranged that an image of the line extends orthogonally to the direction of spectral dispersion. This enables efficient use of the two-dimensional nature of the detector to acquire multiple spectra simultaneously.. The spectral data obtained for each location of the point or line focus can be combined in a "step and stitch" process to generate a spectral map of the area.

International Patent Application No. WO 2008/090350 describes a continuous collection process, in which the sample is scanned in the longitudinal direction of the line focus. Synchronously with this, charge in the CCD is shifted from pixel to pixel in the same direction, towards an output register of the CCD, and continues to accumulate as the scan proceeds. This longitudinal line scan is repeated at laterally spaced locations. This enables a spectral map of an area of a sample to be obtained without performing the "step and stitch" process (in one axis), hence helping to avoid discontinuities.

### Summary of Invention

According to a first aspect of the invention there is provided spectroscopy apparatus comprising:
a support for a sample;
a light source arranged to generate a light profile on the sample;
the support and light source arranged such that the light profile is movable relative to the sample;
an optical input for receiving light generated by interaction of the sample with light from the light source;
a detector comprising a two-dimensional array of photodetector elements;
a dispersive device arranged between the optical input and the detector to spectrally disperse light received by the optical input in a spectral direction across the detector;
an optical splitter located in an optical path between the optical input and the detector to split light based upon wavenumber such that, for a spectrum generated by a given point on the sample, each of a first portion and a second portion of the spectrum is dispersed across photodetector elements of a different row or column of the array; and
a controller arranged to control shifting of data between the photodetector elements in a spatial direction, perpendicular to the spectral direction, synchronously with relative movement between the light profile and the sample so that data is accumulated on each of the first and second portions of the spectrum across different sets of photodetector elements of the detector during the relative movement.

According to a second aspect of the invention there is provided spectroscopy apparatus comprising:
a support for a sample;
a light source arranged to generate a light profile on the sample;
the support and light source arranged such that the light profile is movable relative to the sample;
an optical input for receiving light generated by interaction of the sample with light from the light source;
a detector comprising a two-dimensional array of photodetector elements;
a dispersive device arranged between the optical input and the detector to spectrally disperse the light received by the optical input in a spectral direction across the detector;
an optical splitter arranged in an optical path between the optical input and the detector to split light based upon wavenumber such that first and second portions of a spectrum generated by a given point on the sample, which occur across a spectral range that is greater than the spectral range provided by a width of the detector in the spectral direction, are directed to photodetector elements of the detector; and
a controller arranged to control shifting of data between the photodetector elements in a spatial direction, perpendicular to the spectral direction, synchronously with relative movement between the light profile and the sample so that data is accumulated on each of the first and second portions of the spectrum across different sets of photodetector elements of the detector during the relative movement.

In the second aspect of the invention, each of the first and second portions may be dispersed across photodetector elements of a different row or column of the array or may be dispersed across different photodetector elements of the same row or column of the array.

The invention may allow a spectral map to be obtained for selected portions of the spectrum that are of interest. In particular, the two portions of the spectrum that are of interest can be collected using a "Continuous Collection" process, in which data is accumulated on each of the first and second portions as data is shifted between the photodetector elements in the spatial direction synchronously with relative movement between the light profile and the sample, even though these two portions may be divided across the detector in the spatial direction and/or occur across a spectral range that is greater than the spectral range provided by a width of the detector in the spectral direction (e.g. there is a spectral gap between the first and second portions).

The optical splitter may comprise at least one splitting filter, such as an edge filter, short pass filter or the like, arranged between the optical input and the detector, the filter transmitting the first portion of the spectrum along a first optical path to the detector and reflecting the second portion of the spectrum along a second, different optical path to the detector.

The apparatus may further comprise a blocking filter arrangement for filtering light received by the optical input, the blocking filter arrangement filtering light wavenumbers directed by the optical splitter along the first optical path and wavenumbers directed by the optical splitter along the second optical path. The blocking filter arrangement may comprise at least one blocking filter, such as a notch filter, before the optical splitter, the at least one blocking filter arranged to filter wavenumbers that would otherwise be directed along the first optical path and wavenumbers that would otherwise be directed along the second optical. The blocking filter arrangement may comprise a first blocking filter, such as an edge or notch filter, in the first optical path for blocking light, based upon wavenumber, directed by the optical splitter along the first optical path and a second, different blocking filter, such as an edge or notch filter, in the second optical path for blocking light, based upon wavenumber, directed along the second optical path by the optical splitter. The first and second blocking filters may be complimentary such that each of the first and second blocking filters blocks light that would otherwise be dispersed across photodetector elements of the detector in which data on the second and first portions, respectively, of the spectrum are accumulated. The apparatus may comprise a plurality of complimentary pairs of first and second blocking filters arranged to be moved in and out of the first and second optical paths such that different portions of the spectrum can be selected (for collection in the Continuous Collection process). Alternatively, each of the first and second blocking filter may be tuneable to block a desired range of wavenumbers. Accordingly, the user can selective partial data on each of the first and second optical paths (arms) for collection in the Continuous Collection process.

The one or more blocking filters may be arranged to be moved in and out of the optical path(s). The apparatus may further comprise a first shutter movable in and out of the first optical path for completely blocking light from travelling along the first optical path to the detector and a second shutter movable in and out of the second optical path for completely blocking light from travelling along the second optical path to the detector. In this way, the user can select to collect full spectra for one of or sequentially for each of the first and second optical paths or simultaneously collect spectra for selected wavenumber regions on each of the optical paths.

According to a third aspect of the invention, there is provided a spectroscopy method comprising:-
illuminating a sample to generate a light profile on the sample;
moving the light profile relative to the sample;
spectrally dispersing received light generated by interaction of the sample with light of the light profile in a spectral direction across a detector, the detector comprising a two-dimensional array of photodetector elements,
splitting the received light based upon wavenumber such that, for a spectrum generated by a given point on the sample, each of a first portion and a second portion of the spectrum is dispersed across photodetector elements of a different row or column of the array; and
shifting data between the photodetector elements in a spatial direction, perpendicular to the spectral direction, synchronously with relative movement between the light profile and the sample so that data on each of the first and second portions of the spectrum accumulates across different sets of photodetector elements of the detector during the relative movement.

According to a fourth aspect of the invention, there is provided a spectroscopy method comprising:-
illuminating a sample to generate a light profile on the sample;
moving the light profile relative to the sample;
spectrally dispersing received light generated by interaction of the sample with light of the light profile in a spectral direction across a detector, the detector comprising a two-dimensional array of photodetector elements,
splitting light based upon wavenumber such that first and second portions of a spectrum generated by a given point on the sample, which occur across a spectral range that is greater than the spectral range provided by a width of the detector in the spectral direction, are directed photodetector elements of the detector; and
shifting of data between the photodetector elements in a spatial direction, perpendicular to the spectral direction, synchronously with relative movement between the light profile and the sample so that data on each of the first and second portions of the spectrum accumulates across different sets of photodetector elements of the detector during the relative movement.

According to a fifth aspect of the invention there is provided spectroscopy apparatus comprising:
a support for a sample;
a light source arranged to generate a light profile on the sample;
an optical input for receiving light generated by interaction of the sample with light from the light source;
a detector comprising a row of photodetector elements;
a dispersive device arranged between the optical input and the detector to spectrally disperse the light received by the optical input across the row of the detector;
an optical splitter arranged in an optical path between the optical input and the detector to split light based upon wavenumber such that spectrally separated first and second portions of a spectrum generated by a given point on the sample, which occur across a spectral range that is greater than a spectral range provided by the row of the detector, are simultaneously directed to photodetector elements of the row.

In this way, two portions of the spectrum of interest that are spectrally separated can be simultaneously recorded without reducing the spectral resolution.

The light profile may be a line focus. The detector may comprise a two-dimensional array of photodetector elements. The dispersive device may be arranged to spectrally disperse the light generated by interaction of the sample with the line focus across multiple rows of the detector such that, for each given point on the sample illuminated by the line focus, spectrally separated first and second portions of the spectrum generated by the given point, which occur across a spectral range that is greater than a spectral range provided by the row of the detector, are simultaneously directed to photodetector elements of the same row.

According to a sixth aspect of the invention, there is provided a spectroscopy method comprising:-
illuminating a sample to generate a light profile on the sample;
spectrally dispersing received light generated by interaction of the sample with light of the light profile in a spectral direction across a detector, the detector comprising a row of photodetector elements,
splitting the received light based upon wavenumber such that, for a spectrum generated by a given point on the sample, spectrally separated first and second portions of the spectrum, which occur across a spectral range that is greater than a spectral range provided by the row of the detector, are simultaneously directed across photodetector elements of the row of the detector.

### Description of the Drawings

**Figure 1** is a schematic representation of a Raman spectroscopy apparatus according to an embodiment of the invention;
**Figure 2** is a perspective view of an analyser, lens and detector of the Raman spectroscopy apparatus shown in Figure 1;
**Figure 3** is a schematic of shifting of charge across the CCD of the Raman spectroscopy apparatus synchronously with movement of a line focus across a sample;
**Figure 4a** is a schematic representation of a Raman spectrum and Figure **4B** is a schematic representation of the Raman spectrum dispersed across the CCD without filtering of the light along either optical path;
**Figure 5a** is a schematic representation of a wavenumber profile filtered by filters in first and second optical paths of the apparatus and **Figure 5b** is a schematic representation of first and second portions of the spectrum, transmitted by these filters, dispersed across the CCD;
**Figures 6a** is a schematic representation of an alternative wavenumber profile filtered by filters in the first and second optical paths and **Figure 6b** is a schematic representation of first and second portions of the spectrum, transmitted by these filters, dispersed across the CCD; and
**Figure 7a** is a schematic representation of a further wavenumber profile filtered by filters in the first and second optical paths and **Figure 7b** is a schematic representation of an alternative embodiment wherein first and second portions of the spectrum, transmitted by filters in the first and second optical paths, are dispersed across different photodetector elements the same row of the array of the photodetector elements.

### Description of Embodiments

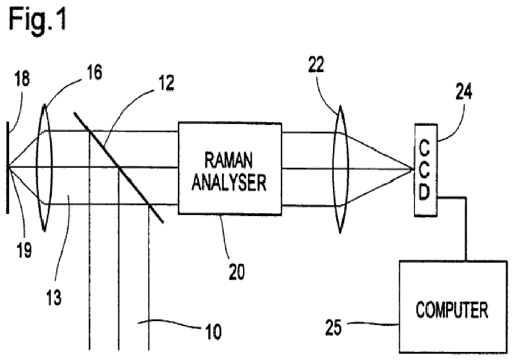

Referring to Figure 1, Raman spectroscopy apparatus according to an embodiment of the invention comprises a dichroic filter 12 arranged at 45 DEG to an incoming laser beam 10. The filter 12 reflects light of the wavelength of the laser beam 10 but transmits all other wavelengths. The laser beam 10 is thus reflected through 90 DEG into an optical path 13, and is focused by a microscope objective lens 16 onto a sample supported on stage 18. Typically, the laser beam 10 will be focused onto the sample to form a specific light profile 19, such as a spot or line, on the sample. Light of various wavelengths scattered from the sample (e.g. as a result of Raman scattering) is collected by an optical input, in this embodiment comprising the lens 16, and passes back through the system. The dichroic filter 12 rejects reflected and Rayleigh scattered light at the same wavelength as the incoming laser beam, and transmits light which has been shifted to other wavelengths. The received Raman light transmitted by the filter 12 is optically processed by an analyser 20 to disperse a spectrum of the Raman light in a spectral direction, the spectrum focused by a lens 22 onto a detector, such as a charge-coupled device (CCD) 24. The signals detected by the CCD 24 may then be acquired by a computer 25 for further processing.

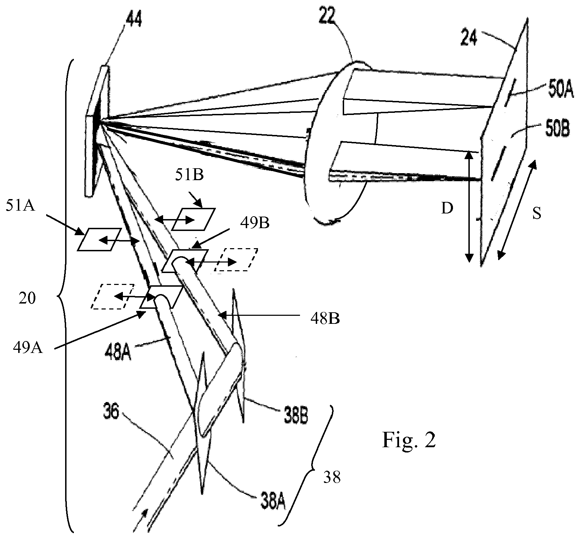

Figure 2 shows the analyser 20 in more detail. The analyser 20 comprises an optical splitter 38 that divides the incoming beam 36 into two beams 48A and 48B based upon wavenumber and a diffraction grating 44, which disperses the beams into a spectrum in the spectral direction, S.

In this embodiment, the optical splitter 38 comprises an edge filter 38A and a mirror 38B arranged in the path of the incoming light 36 before the diffraction grating 44. The edge filter 38A is a short pass filter tilted with respect to the incoming beam 36 to split the incoming beam 36 into two beams having different wavenumber ranges that travel to the detector 24 along different optical paths 48A and 48B. The edge filter 38A passes the low Raman shift wavenumbers, but reflects higher Raman shift wavenumbers as beam 48A. The mirror 38B reflects the higher Raman shift wavenumbers as beam 48B. The optical paths 48A, 48B are arranged, for example, through appropriate positioning of the filter 38A and mirror 38B, such that a spectrum generated by a given point on the sample is dispersed across photodetector elements 104 of two rows of the detector 24.

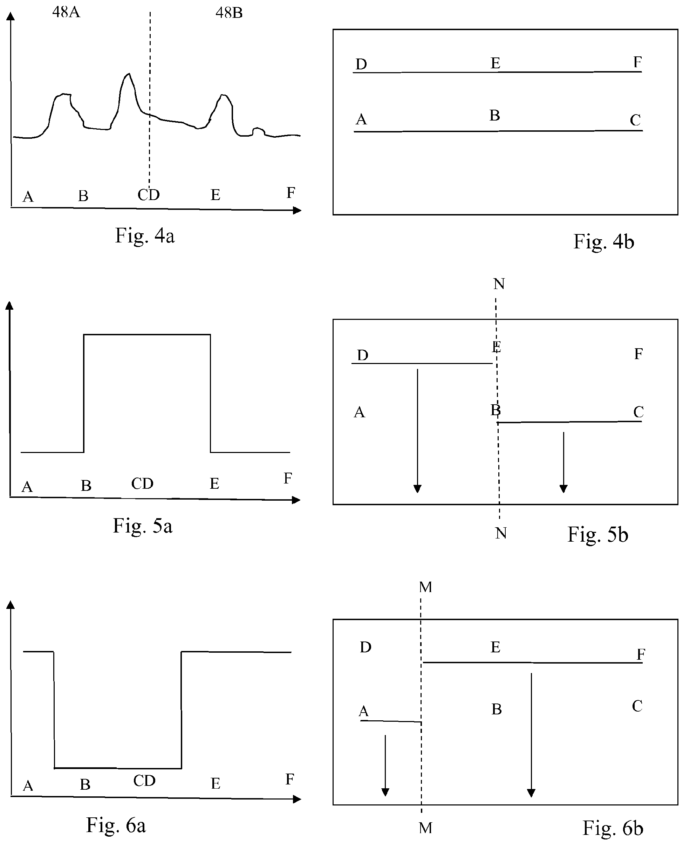

As the spectrum is split across two rows of the detector 24, the grating 44 is arranged to disperse the spectrum of interest more widely than can be accommodated within a single width of the CCD 24. The diffraction grating 44 is arranged to disperse beams 48A and 48B in the spectral direction, S, such that the spectrum of each beam 48A, 48B occupies the full width of the detector 24 in the spectral direction, but with the spectra spaced in the spatial direction, D. As shown in Figure 4B, first beam 48A comprises a first set of wavenumbers A to C and the second beam 48B comprises a second set of wavenumbers D to E, the diffraction grating arranged to disperse the beams 48A, 48B such that the full spectral ranges, A to C and D to E, are captured by the detector 44.

To collect the spectrum of either beam 48A, 48B over the full spectral range A to C or D to E, using the method as described in WO 2008/090350, the other beam 48B, 48A has to be blocked. To this end, the analyser 20 comprises blocking shutters 51A, 51B movable in and out of the beam 48A, 48B under the control of motors (not shown) to block one of the beams 48A, 48B whilst spectra for the other beam 48A, 48B is collected. Collection of spectra across the entire spectral range A to E can be achieved by sequentially collecting each part A to C and D to E of the spectrum of incoming beam 36.

The analyser 20 further comprises blocking filters 49A, 49B movable in and out of beams 48A, 48B under the control of motors (not shown). The blocking filters 49A, 49B are, for example edge or notch filters, for blocking the passage of selected wavenumbers of beams 48A and 48B, respectively. More specifically, the blocking filters 49A and 49B are arranged to block wavenumbers of the beams 49A and 49B such that, first and second portions 50A, 50B of a spectrum generated by a given point on the sample that are transmitted through the blocking filters 49A, 49B, are dispersed across different sections of the detector 24 divided along a line in the spatial direction, D. In this way, each portion 50A, 50B can be simultaneously collected, wherein data for each portion 50A, 50B of the spectrum is accumulated in the detector 24 as charge is shifted between the photodetector elements in the spatial direction synchronously with relative movement between the light profile 19 and the sample 18. Data is accumulated on each of the first and second portions 50A, 50B of the spectrum across different (mutually exclusive) sets of photodetector elements 104 of the detector 24 during the relative movement.

Figure 5B illustrates how the beams 48A, 48B may be filtered by filters 49A, 49B having a combined filtering profile as shown in Figure 5A, with data on a first portion 50A of the spectrum, extending across the spectral range D to E, being accumulated in a first half of the detector 24 to the left of line N-N and a data on a second portion 50B of the spectrum, extending across the spectral range B to C, being accumulated in a second half of the detector 24 to the right of line N-N.

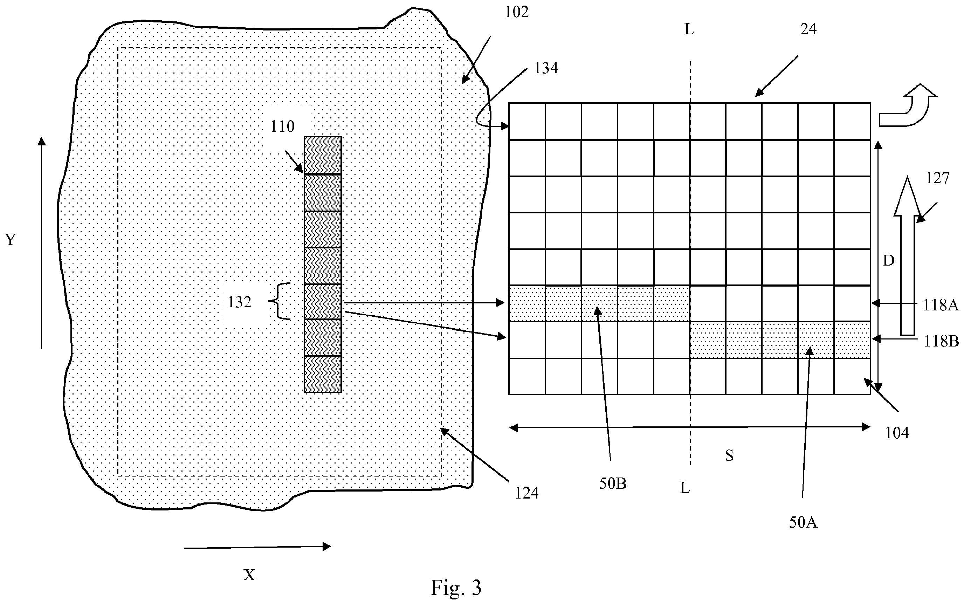

Collection of data on the portions 50A and 50B will now be described in more detail with reference to Figure 3. Figure 3 shows part of area 124 of sample 102 illuminated by the line focus 110. Y shows the direction of movement of the sample 102 and arrow 127 the direction that charge is shifted on the CCD array 24. For each region 132 (hereinafter referred to as a point) on the line focus 110, a Raman spectrum (indicated by the shaded area) is dispersed across the CCD array 24 in a spectral direction S, perpendicular to spatial direction D. The spectrum generated by an illuminated point 132 along a line focus 110 is dispersed across the detector 24 with a first portion 50A of the spectrum dispersed across photodetector elements 104 of a different row 118A of array 24 to that 118B across which the second portion 50B is dispersed.

It should be understood that the size of the points 132 and photodetector elements 104 have been exaggerated in Figure 3. In reality there are many more times this number of points and many more times this number of rows 118 of photodetector elements on the CCD 24 for such a size of CCD 24.

The exposure of the CCD 24 to light results in the accumulation of charge in each photodetector element 104. This charge represents a spectral value (or bin) for the Raman spectrum and is in proportion to the amount of light it has received during the exposure.

The sample 102 moves continuously relative to the line focus 110 simultaneously with shifting of the charge between the rows 118 of the CCD 24 in direction 127. Charge steadily accumulates for scattered light originating from a given region on the sample 102 in successive photodetector elements 104 of the array 24. For portion 50A, charge accumulates in the photodetector elements to the right of line L-L and, for portion 50B, charge accumulates in the photodetector elements to the left of line L-L. The shifting of charge continues until the charge is shifted into readout register 134. The charge in readout register 134 is read out to computer 25. Thus, between shifts in the charge on the CCD 24, the shift register 134 holds data for portion 50A of a first spectrum for light scattered from a first point 132 and a portion 50B of a second spectrum for light scattered from a second, different point 132.

In another embodiment, blocking filters 49A, 49B may be tuneable to allow alterations in the filtering profile. For example, as shown in Figures 6A and 6B the first portion and second portion are accumulated across different sets of photodetector elements of the detector 24 sectioned by a line M-M.

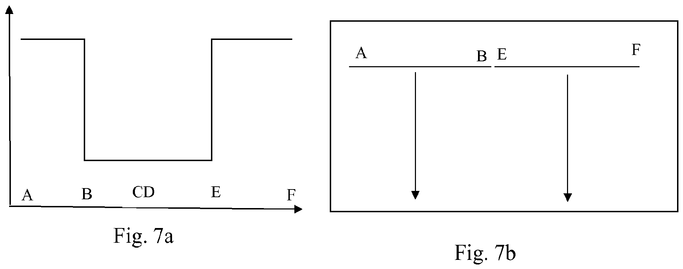

Figures 7a and 7b shows a further embodiment, wherein the first and second portions of a spectrum are directed towards different photodetector elements 104 of the same row of the detector array 24. In Figure 7b, the first and second portions occur across a spectral range A-F that is greater than the spectral range provided by a width of the detector 24 in the spectral direction, S.

Figure 7b includes arrows to show that the data on the first and second portions is accumulated across the detector synchronously with relative movement of a line focus across the sample.

In an alternative embodiment, not shown, data may be gathered on first and second portions of a spectrum, dispersed across the detector as shown in Figure 7b, generated from a focal point or line focus that does not move relative to the sample. For example, this may be carried in a step and stitch method or when a mapping of a sample is not required. In such an embodiment, data on the spectrum generated from a given point would not be accumulated as charge is shifted across the detector. Data on first and second portions of a spectrum generated by a given point may be accumulated in a single row 118 of the detector 24, wherein at the end of sampling the charge is shifted to the read-out register in order for the data to be read-out to the computer. Such an embodiment may allow high resolution partial spectra to be collected over the full height of the detector in the spatial direction.

The apparatus may allow the user to select portions of the whole spectrum that are of interest and collect data on these portions using a Continuous Collection technique without reducing resolution.

Alternations and modifications may be made to the described embodiment without departing from the invention as defined herein. For example, the incoming beam may be split into three or more beams based upon wavenumber and, each one of the three or more beams may be dispersed across photodetector elements in different rows of the detector. Filters may be provided to allow the user to select a portion of each of the three or more beams that is of interest for collection by accumulation of data across the detector synchronously with portions in the other beams.

The filter(s) for isolating the portions of the spectrum of the incoming beam that are of interest may be provided before the optical splitter 38 or after the diffraction grating 44. The optical splitter may also be provided after the diffraction grating 44.

## Claims

1. A spectroscopy apparatus comprising:
a support for a sample;
a light source arranged to generate a light profile on the sample;
an optical input for receiving light generated by interaction of the sample with light from the light source;
a detector comprising a row of photodetector elements;
a dispersive device arranged between the optical input and the detector to spectrally disperse the light received by the optical input across the row of the detector;
an optical splitter arranged in an optical path between the optical input and the detector to split light based upon wavenumber such that spectrally separated first and second portions of a spectrum generated by a given point on the sample, which occur across a spectral range that is greater than a spectral range provided by the row of the detector, are simultaneously directed to photodetector elements of the row.

2. A spectroscopy apparatus according to claim 1, wherein the light profile is a line focus and the detector comprises a two-dimensional array of photodetector elements, the dispersive device arranged to spectrally disperse the light generated by interaction of the sample with the line focus across multiple rows of the detector such that, for each given point on the sample illuminated by the line focus, spectrally separated first and second portions of the spectrum generated by the given point, which occur across a spectral range that is greater than a spectral range provided by the row of the detector, are simultaneously directed to photodetector elements of the same row.

3. A spectroscopy apparatus according to claim 1 or claim 2, wherein the optical splitter comprises at least one splitting filter arranged between the optical input and the detector, the filter transmitting the first portion of the spectrum along a first optical path to the detector and reflecting the second portion of the spectrum along a second, different optical path to the detector.

4. A spectroscopy apparatus according to any one of the proceeding claims, further comprising a blocking filter arrangement for filtering light received by the optical input, the blocking filter arrangement filtering wavenumbers directed by the optical splitter along the first optical path and wavenumbers directed by the optical splitter along the second optical path.

5. A spectroscopy apparatus according to claim 4, wherein the blocking filter arrangement comprises at least one blocking filter before the optical splitter, the at least one blocking filter blocking wavenumbers that would otherwise be directed along the first optical path and blocking wavenumbers that would otherwise be directed along the second optical.

6. A spectroscopy apparatus according to claim 4, wherein the blocking filter arrangement comprises a first blocking filter in the first optical path for filtering light, based upon wavenumber, directed by the optical splitter along the first optical path and a second, different blocking filter in the second optical path for filtering light, based upon wavenumber, directed along the second optical path by the optical splitter.

7. A spectroscopy apparatus according to claim 6, wherein the first and second blocking filters are complimentary such that each of the first and second blocking filters blocks light that would otherwise be dispersed across photodetector elements of the detector in which data on the second and first portions, respectively, of the spectrum are accumulated.

8. A spectroscopy apparatus according to claim 7, wherein the apparatus comprises a plurality of complimentary pairs of first and second blocking filters arranged to be moved in and out of the first and second optical paths such that different portions of the spectrum can be selected.

9. A spectroscopy apparatus according to claim 7 or claim 8, wherein each of the first and second blocking filter is tuneable to block a desired range of wavenumbers.

10. A spectroscopy apparatus according to any one of claims 4 to 9, wherein the one or more blocking filters are arranged to be moved in and out of the optical path(s).

11. A spectroscopy apparatus according to any one of the preceding claims, further comprising a first shutter movable in and out of the first optical path for completely blocking light from travelling along the first optical path to the detector and a second shutter movable in and out of the second optical path for completely blocking light from travelling along the second optical path to the detector.

12. A spectroscopy method comprising:-
illuminating a sample to generate a light profile on the sample;
spectrally dispersing received light generated by interaction of the sample with light of the light profile in a spectral direction across a detector, the detector comprising a row of photodetector elements,
splitting the received light based upon wavenumber such that, for a spectrum generated by a given point on the sample, spectrally separated first and second portions of the spectrum, which occur across a spectral range that is greater than a spectral range provided by the row of the detector, are simultaneously directed across photodetector elements of the row of the detector.
